# EUROPEAN PATENT APPLICATION

(11) **EP 0 845 380 A1**
(43) Date of publication of application: **03.06.1998**
(21) Application number: 97309636.5
(22) Date of filing: 27.11.1997
(51) Int. Cl.: B60J 10/04, B60J 10/00

(54) **Seal**

(30) Priority: 27.11.1996 GB 9624660
(71) Applicant: Standard Products Limited, Huntingdon Cambridgeshire PE18 6NU (GB)
(72) Inventor: Keys, James Frederick, Saint Neots, Cambridgeshire PE19 3AB (GB)
(74) Representative: Jones, Michael Raymond

(57) **Abstract**

There is disclosed a seal 1 for sealingly securing a movable pane 5 of glazing material in relation to a window frame in an upper part of a vehicle door, the seal comprising:
a first seal part 2 which defines a first channel 8A lying in a first plane and which is intended for fitting on a flange to secure the seal 1 relative to the window frame; and
a second seal part 3 which defines a second channel 19 lying in a second plane and which is for accommodating and securing an edge region of the movable pane 5 relative to the window frame, the second channel 19 being inclined to the first channel 8A;
wherein the disposition of the first and second channels 8A, 19 is such that, in use, with the first seal part 2 secured on a flange which thus lies in the first plane, and with the second seal part 3 accommodating the edge region of the movable pane 5 which thus lies in the second plane, the flange 4 stops short of the second plane and the pane 5 extends to or passes across the first plane, whereby the great majority of the first seal 2 part lies behind the second seal part 3 as viewed from the exterior of the vehicle in a position perpendicular to the plane of the movable pane 5 at a location opposite to the first seal part 2.

## Description

This invention relates to a seal such as that employed in a window frame in an upper part of a vehicle door, for securing a movable pane of glazing material in relation to the window frame.

Seals of this general type are known, such as those of the current Opel Astra. In the known Opel Astra arrangement the seal comprises a first seal part defining a first channel and intended for fitting onto a flange to secure the seal relative to the window frame; and a second seal part defining a second channel for accommodating and securing an edge region of a movable pane. The two channels in this arrangement are approximately at right angles to each other. These days, not only is a flush window system desirable, but also it is important from the aesthetic point of view to minimise the amount of seal visible from the exterior of the vehicle. In the Opel Astra arrangement the first channel and flange not only cross the plane in which the second channel and movable pane lie but also are located between the edge region of the movable pane and the main body of the vehicle with the result that a considerable amount of material from which the seal is formed is visible from the exterior of the vehicle. Moreover, in the Opel Astra arrangement, as illustrated in GB-2233377-A, one and the same reinforcing core serves to reinforce not only the two opposing side walls and base of the first channel but also what can be regarded as the base and one of the opposing side walls of the second channel. Thus the reinforcing core is rather large.

According to the present invention, there is provided a seal for sealingly securing a movable pane of glazing material in relation to a window frame in an upper part of a vehicle door, the seal comprising:
a first seal part which defines a first channel lying in a first plane and which is intended for fitting on a flange to secure the seal relative to the window frame; and
a second seal part which defines a second channel lying in a second plane and which is for accommodating and securing an edge region of the movable pane relative to the window frame, the second channel being inclined to the first channel;
wherein the disposition of the first and second channels is such that, in use, with the first seal part secured on a flange which thus lies in the first plane, and with the second seal part accommodating the edge region of the movable pane which thus lies in the second plane, the flange stops short of the second plane and the pane extends to or passes across the first plane, whereby the great majority of the first seal part lies behind the second seal part as viewed from the exterior of the vehicle in a position perpendicular to the plane of the movable pane at a location opposite to the first seal part.

If desired, the second channel may be inclined to the first channel at an angle of less than 90°, and conveniently at an angle in the range from 80° to 70°.

The first channel defined by the first seal part has two opposing side walls and, extending therebetween, a base. Often the side walls of a channel intended to be located on a flange are generally parallel but, if desired, the two opposing side walls of the first seal part may be inclined at quite an angle to each other. Preferably the first seal part includes a reinforcing core embedded in the rubber or elastomeric material from which the seal is formed. The reinforcing call can be formed of steel and can have a thickness of 0.5mm and it can be stamped to assist in allowing the seal to be bent to follow a curved region, for example between the top of an A column and a so-called header, or between the header and the top of a B column in the vehicle window.

The reinforcing core can be relatively small.

With regard to the second seal part, it has regions defining the second channel for accommodating the edge region of the movable pane and taking the form of two opposing side walls and, extending therebetween, a base; the side walls can be generally parallel. Near to the free end region of the side wall which is to be on the exterior of the window pane there can be located a limb directed into the channel and generally towards the base, and intended to fit smoothly against the movable pane so as to create an effective seal.

The second part can also include its own separate reinforcing core located in the regions of the rubber or elastomeric material which define the second channel.

That region of the second seal which defines the side wall of the second channel which is to be on the outside of the movable pane should, from the point of view of being as flush as possible, have a thickness of less than 4.0mm and ideally should be no more than 3.0mm.

The seal in accordance with the present invention can also have an additional limb intended to extend from the second seal part and to effect a seal between the second seal part and the frame of the door when the door is in the closed position.

From the point of view of minimising the amount of rubber or elastomeric material visible from the exterior of the vehicle when the seal is properly located, preferably the exposed side wall of the second part has a length as measured parallel to the plane of the movable pane and as measured in the plane of the cross-section, of less than 15mm.

The seal of the present invention can be curved around the reasonably sharp corners. In practice, the seal of the present invention can continue below the waist of a vehicle body door so that it can serve to locate and secure the movable pane when in the fully lowered position.

As indicated above, the retention flange and the first seal part with the carrier channel are behind the glass run channel (the second seal part) when viewed from outside the car, which means that the width of the visible rubber or elastomer is considerably less, and thus the styling is improved, particularly when compared with the Opel Astra arrangement mentioned above.

Moreover, with the core of the first seal part being flexible, a single extrudate can be provided which can be used up one pillar, across the header, and down the other pillar, with any necessary bending being manual or by using a simple jig. The ease of bending means that the tool costs are low and that a seal of good (small) appearance is obtained.

The seal of the present invention is particularly useful on a semi-flushed rolled channel door arrangement as disclosed in our European Patent Application No. 95300234.2 (Publication No. 0664235).

The window frame to which the seal of the present invention is to be secured may be shaped so as to carry an additional seal intended to abut the internal face of the movable pane.

For a better understanding of the present invention, and to show how the same may be carried into effect, reference will now be made, by way of example, to the accompanying drawings, in which:
Figure 1 is a cross-section through an embodiment of a seal in accordance with the present invention, mounted on a flange and securing a moving pane of glazing material; and
Figure 2 is a cross-section showing the relationship between the window frame of a door and the door frame, and also showing a seal in accordance with Figure 1 as well as an additional seal.

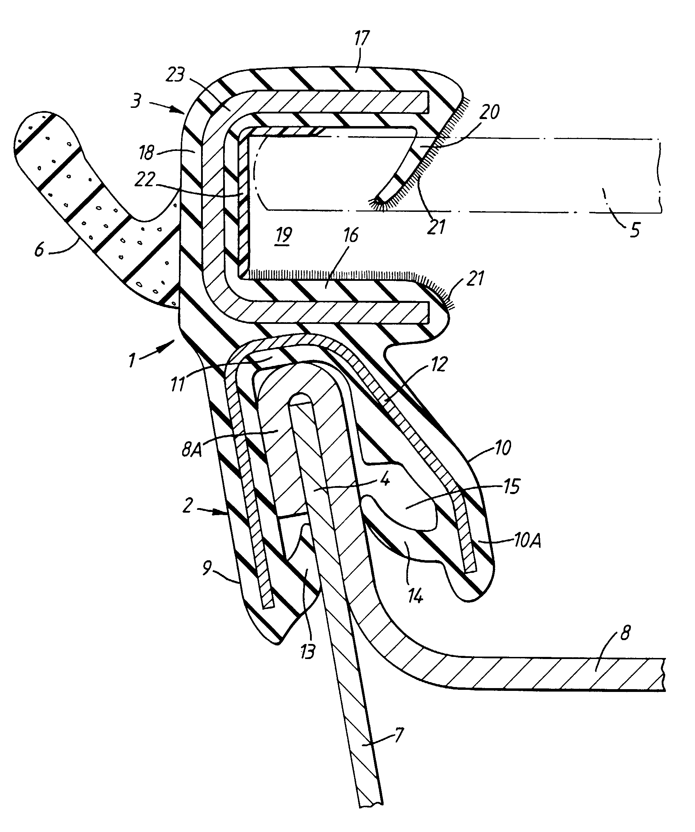

Referring firstly to Figure 1, there is shown a seal generally indicated by the reference numeral 1 which has a first seal part 2 and a second seal part 3.

The second seal part 2 is mounted on a flange 4 and the second seal part 3 is used to secure and guide a moving pane 5 of glazing material.

The seal 1 is also provided with a sponge sealing limb 6 intended to bridge the gap between the seal 1 and a door frame (not shown in Figure 1).

The flange 4 is formed of two components namely a planar sheet 7 and a curved sheet 8 which abuts one side of the sheet 7 and which has an end region 8A which is curved over the free end region of the sheet 7.

The first seal part 2 has a first wall 9, an opposing side wall 10, and, extending between the two side walls 9 and 10, a base 11. The opposing side wall 10 is, over the majority of its length, not parallel to the first side wall 9 but is inclined to it, with only the free end region 10A of the opposing side wall 10 being parallel to the first side wall 9.

Embedded in the first seal part 2 is a reinforcing core 12 which can be formed of steel and can have a thickness of about 0.5mm and a length (as measured in the cross-section) of about 31mm.

The first seal part 2 is provided with a lip 13 on the free end region of the first side wall 9 and abutting the flange sheet 7, and the opposing side wall 10 has a lip 14 projecting from its free end region 10a and abutting the rolled flange sheet 8.

Defined between the opposing side walls 9 and 10 and the base 11 is a channel 15 substantially occupied by the flange 4. The limb 13 on the first side wall 9 not only provides a seal but also serves to prevent removal of the flange 4 by virtue of its interaction with the free end region 8A of the rolled flange sheet 8.

Turning now to the second seal part 3 there is a first side wall 16 and an opposing, generally parallel, side wall 17, with a base 18 extending between the two side walls. The two side walls 16 and 17 and base 18 define between themselves a channel 19. Projecting into the channel 19 from the free end region of the opposing side wall 17 is a limb 20 which is provided with flocking 21 as is also part of the first side wall 16. Near the blind end of the channel 19 is an L-shaped member 22 which has a low friction surface against which the movable pane 5 can slide as it is being raised and lowered. It can also limit the lateral movement of the pane 5.

The second seal part 3 is provided with its own independent reinforcing core 23 which could be formed from, for example, aluminium and could have a thickness of 1.0mm and could be lanced or otherwise formed to assist bending of the seal 1 around a corner.

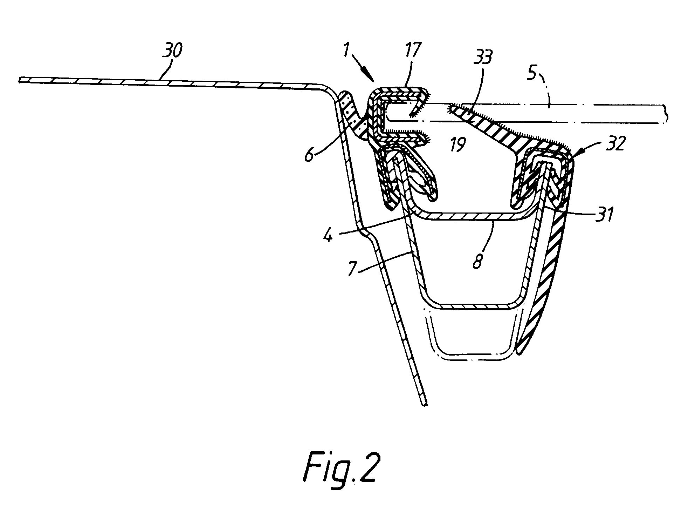

Referring briefly to Figure 2, there is shown, on a considerably smaller scale, the seal of Figure 1 located on the flange 4 provided by the flange parts 7 and 8. Also shown is the sponge limb 6 abutting a panel forming part of the door frame 30.

It can be seen that the flange members 7 and 8 curve around and form a further flange 31 on which is a secondary seal 32 which can be conventional in itself and which can be used to help support the movable pane in its location in the channel 19, particularly in view of the flexible finger 33 forming part of the seal 32.

## Claims

1. A seal for sealingly securing a movable pane of glazing material in relation to a window frame in an upper part of a vehicle door, the seal comprising:
a first seal part which defines a first channel lying in a first plane and which is intended for fitting on a flange to secure the seal relative to the window frame; and
a second seal part which defines a second channel lying in a second plane and which is for accommodating and securing an edge region of the movable pane relative to the window frame, the second channel being inclined to the first channel;
wherein the disposition of the first and second channels is such that, in use, with the first seal part secured on a flange which thus lies in the first plane, and with the second seal part accommodating the edge region of the movable pane which thus lies in the second plane, the flange stops short of the second plane and the pane extends to or passes across the first plane, whereby the great majority of the first seal part lies behind the second seal part as viewed from the exterior of the vehicle in a position perpendicular to the plane of the movable pane at a location opposite to the first seal part.

2. A seal according to claim 1, wherein the second channel is inclined to the first channel at an angle of less than 90°.

3. A seal according to claim 2, wherein the angle is in the range from 80° to 70°.

4. A seal according to claim 1, 2 or 3, wherein the first channel defined by the first seal part has two opposing side walls and, extending therebetween, a base; and wherein the first seal part includes a reinforcing core embedded in the material from which the seal is formed.

5. A seal according to claim 4, wherein the reinforcing core is formed of steel and has a thickness of about 0.5mm.

6. A seal according to any preceding claim, wherein the second seal part has regions defining the second channel for accommodating the edge region of the movable pane and taking the form of two opposing side walls and, extending therebetween, a base; and wherein near to the free end region of the side wall which is to be on the exterior of the window pane there is located a limb directed into the channel and generally towards the base, and intended to fit smoothly against the movable pane so as to create an effective seal.

7. A seal according to claim 6, wherein the second seal part includes its own separate reinforcing core located in the regions of the material which define the second channel.

8. A seal according to claim 6 or 7, wherein that region of the second seal part which defines the side wall of the second channel which is to be on the outside of the movable pane has a thickness of less than 4.0mm.

9. A seal according to claim 8, wherein the thickness is no more than 3.0mm.

10. A seal according to any preceding claim, which also includes an additional limb intended to extend from the second seal part and to effect a seal between the second seal part and the frame of the door when the door is in the closed position.

11. A seal according to any preceding claim, wherein the exposed side wall of the second seal part has a length as measured parallel to the plane of the movable pane and as measured in the plane of the cross-section through the whole seal, of less than 15mm.
